# EUROPÄISCHE PATENTSCHRIFT

(11) **EP 1 414 086 B1**
(45) Veröffentlichungstag und Bekanntmachung des Hinweises auf die Patenterteilung: **24.09.2008**
(21) Anmeldenummer: 03022467.9
(22) Anmeldetag: 08.10.2003
(51) Int. Cl.: H01M 2/34, H01M 10/48

(54) **Wiederaufladbares galvanisches Element mit mindestens einer Lithium interkalierenden Elektrode**
Rechargeable galvanic element with at least a lithium intercalation electrode
Element galvanique rechargeable avec au moins une électrode intercalant le lithium

(30) Priorität: 25.10.2002 DE 10250857
(43) Veröffentlichungstag der Anmeldung: 28.04.2004
(73) Patentinhaber: VARTA Microbattery GmbH, 30419 Hannover (DE)
(72) Erfinder: Haug, Peter, Dr., 73479 Ellwangen (DE); Birke, Peter, Dr., 73479 Ellwangen (DE); Ilic, Dejan, Dr., 73479 Ellwangen (DE); Hald, Rainer, 73479 Ellwangen (DE); Wöhrle, Thomas, Dr., 73479 Ellwangen (DE)
(74) Vertreter: Renger, Florian

(56) Entgegenhaltungen:
- EP-A- 0 973 212
- EP-A- 1 033 766
- US-B1- 6 391 491

## Beschreibung

Gegenstand der Erfindung ist ein wiederaufladbares galvanisches Element mit mindestens einer Lithium interkalierenden Elektrode nach dem Oberbegriff des Anspruchs 1.

Wiederaufladbare Lithium-Zellen in dünnen flexiblen Gehäusen, auch als Softpack bezeichnet, werden aufgrund ihrer hohen Energiedichte und dem daraus resultierenden niedrigen Gewicht zunehmend in portablen Hightech-Geräten wie PDA's, Organizern oder Mobiltelefonen eingesetzt. Wegen ihrer hohen Energiedichte und des brennbaren organischen Elektrolyten, müssen bei diesem Zelltyp jedoch besondere Sicherheitsvorkehrungen getroffen werden, damit eine Gefährdung des Benutzers bei unsachgemäßer Behandlung der Zelle ausgeschlossen werden kann.

Daher besitzen wiederaufladbare Lithium-Zellen eine äußere elektronische Sicherheitsschaltung, die den Lade- und Entladevorgang überwacht und die Zelle vor unsachgemäßer Behandlung wie beispielsweise externem Kurzschluss schützt. In vielen Fällen reicht jedoch die Absicherung der Zelle über eine externe Elektronik nicht aus. Deshalb werden zunehmend Sicherheitsprüfungen an Lithium-Zellen ohne Elektronik vorgenommen (z.B. Underwriter Laboratories). Dabei muss eine solche "nackte" Zelle einen externen Kurzschluss oder eine Überladung auf bis zu 12 Volt genauso sicher bestehen wie eine Zelle mit einer äußeren Sicherheitselektronik.

Eine weitere Anforderung an eine "nackte" Lithium-Zelle im Softpack ist, dass sie bei einem externen Kurzschluss nicht überhitzt, sich öffnet oder gar verbrennt. Hierzu wird meist ein sogenannter "Shutdown"-Separator in der Zelle eingesetzt, der bei der Überhitzung der Zelle schmilzt, seine Porosität verliert und so die weitere Entladung der Zelle stoppt. Dieser Mechanismus ist jedoch irreversibel und setzt unter Umständen zu spät ein.

Insbesondere die Überladung ist bei wiederaufladbaren Lithium-Zellen extrem kritisch. Hierbei spielt sich beispielsweise bei einer üblichen Lithium-Polymer- oder Wickelzelle bestehend aus einer graphithaltigen Anode und einer lithiumcobalt-(LiCoO₂)-haltigen Kathode folgendes Szenarium ab:

### Ladung bis 4,2 Volt:

Ca. 50% des Lithiums wird aus dem LiCoO₂ ausgelagert und in die Graphitschichten der Anode interkaliert. Dabei sind die Elektroden so dimensioniert, dass der Graphit das gesamte ausgelagerte Lithium aufnehmen kann.

### Ladung auf über 4,2 Volt:

Aus dem LiCoO₂ wird weiteres Lithium ausgelagert. Da die Graphitschichten bereits befüllt sind, wird nun auf der Anode oberflächlich metallisches Lithium abgeschieden.

### Ladung auf weit über 4,2 Volt:

Jetzt zersetzen sich bereits Bestandteile des Elektrolyten und führen zur starken Aufgasung der Zelle. Zudem wird die LiCoO₂ - Struktur durch die weitere Auslagerung des Lithiums immer instabiler, bis sie unter Freisetzung von reaktivem Sauerstoff zusammenbricht. Dieser Prozess führt zur starken Erwärmung der Zelle, bis diese schließlich explosionsartig verbrennt.

Deshalb wird bei Lithium-Wickelzellen im Hardcase (z.B. Aluminium-Becher) oft mit einem extern angebrachten PTC-Element (Positive Temperature Coefficient Device) die Überladesicherheit gewährleistet. Voraussetzung hierfür ist, dass die bei der Überladung in der Zelle entstehende Wärme durch ein thermisch gut leitendes Hardcase zum PTC geführt wird.

Aus den Dokumenten US 5876 868 und EP 818838 A2 ist es bekannt, ein PTC-Element im eine Berstmembran enthaltenden Verschlussdeckel von Lithium-Rundzellen anzuordnen.

Dem Dokument US 3546024 ist es zu entnehmen, einen Temperaturschalter in eine wiederaufladbare Ni/Cd-Zelle einzubauen, wobei der Temperaturschalter in einem Freiraum innerhalb des Elektrodenwickels angebracht ist.

In der EP 0 973 212 ist eine Lithium-Zelle mit einem Foliengehäuse beschrieben, wobei die Zelle innerhalb oder Außerhalb des Gehäuses ein PTC-Element aufweist.

Der Erfindung liegt die Aufgabe zugrunde, ein eingangs genanntes galvanisches Element mit einem Überladeschutz zu schaffen, wobei insbesondere die Bauhöhe und das Volumen des galvanischen Elements kaum vergrößert werden und unter allen Betriebsbedingungen zuverlässig eine Überhitzung der Zelle mit nachfolgender Zerstörung vermieden wird.

Diese Aufgabe wird bei einem galvanischen Element der eingangs genannten Art durch die Merkmale des Anspruchs 1 gelöst. In den Unteransprüchen sind vorteilhafte Ausgestaltungen der Erfindung angegeben.

Durch den Einbau eines PTC-Elements in eine Lithium-Polymerzelle im Softpack kann eine gegen Überladung und gegen externen Kurzschluss sichere Zelle hergestellt werden.

Das PTC-Element wird elektrisch leitend, beispielsweise durch Schweißen oder Löten zwischen den Elektroden und den äußeren Kontakten, im Ableiter bzw. im elektrischen Anschluß integriert. Dabei kommt das PTC-Element im Siegelrand des Softpacks zu liegen. Bei Einsatz von aggressiven Elektrolyten wird das PTC-Element mit einem gegen organische Elektrolyte resistenten Kunststoffüberzug versehen, beispielsweise durch Polyimidklebebänder, Polyethylen oder Polypropylen-Siegelfolien, Epoxidharz oder Polyurethan.

Das PTC-Element besteht vorteilhaft aus einem Polymer, in dem leitfähige Partikel gut verteilt vorliegen. Es ist bei tiefen Temperaturen gut leitfähig, da dann die leitfähigen Partikel in elektrisch leitfähigem Kontakt miteinander stehen. Ab einer für jeden PTC spezifischen Temperatur quillt das Polymer auf, und die leitfähigen Partikel verlieren ihren Kontakt, so dass der Widerstand des PTC-Elements schlagartig stark ansteigt. Ein typisches PTC-Element ist beispielsweise der sogenannte Polyswitch (Bezeichnung für PTC-Elemente der Raychem Corporation, Menlo Park, CA, USA., die im Datenbuch "Current Protection Data Book for Polyswitch Resettable Fuses" (02/1997) herausgegeben von Raychem Corporation beschrieben sind).

Wird ein solches PTC-Element in einer Lithium-Polymerzelle mit einem der Ableiter in Reihe geschaltet, so ist bei niedrigen Temperaturen die elektrische Performance beim Be- und Entladen der Zelle voll gegeben. Wird die Zelle jedoch stark überladen oder extern kurzgeschlossen, so führt die hierbei im Softpack entstehende Wärme zum sprunghaften Anstieg des elektrischen Widerstandes, so dass der Überladevorgang unterbrochen wird.

Von besonderer Bedeutung ist, dass das PTC-Element innerhalb der Zelle bzw. im Softpack, der gegebenenfalls eine Vielzahl von aufeinandergestapelten Elektroden enthält, angebracht ist, da nur so die freiwerdende Wärme bei der Überladung das PTC-Element rechtzeitig aktiviert. Ein Anbringen des PTC-Elements außerhalb der Zelle am Softpackgehäuse führt, im Gegensatz zum gut wärmeleitenden Hardcase bei Rundzellen nicht zum rechtzeitigen Ansprechen des PTC-Elements und ist somit kein sicherer Überladeschutz. Dies liegt einerseits am grundsätzlich schlechter wärmeleitenden Softpackgehäuse und andererseits an der bei Überladung mit Ladespannungen von weit über 4,2 Volt auftretenden Gasung der Zelle, die den thermischen Kontakt zum PTC-Element zusätzlich vermindert.

Bei Verwendung eines erfindungsgemäßen PTC-Elements ist eine Überladesicherheit bis 32 Volt gewährleistet, und die geforderte Sicherheit bei externem Kurzschluss wird ebenfalls erreicht. Im Gegensatz zu den üblicherweise eingesetzten "Shutdown"-Separatoren ist dieser Prozess reversibel, so dass die Zelle nach einem solchen externen Kurzschluss weiterhin voll funktionsfähig ist.

Im folgenden ist die Erfindung anhand der Figuren 1 bis 3 weiter erläutert.
- Figur 1: zeigt schematisch den grundsätzlichen Aufbau einer erfindungsgemäßen Zelle mit integriertem PTC.
- Figur 2: zeigt das Verhalten einer erfindungsgemäßen Zelle bei Überladung und
- Figur 3: zeigt das Verhalten einer Vergleichszelle ohne das PTC-Element.

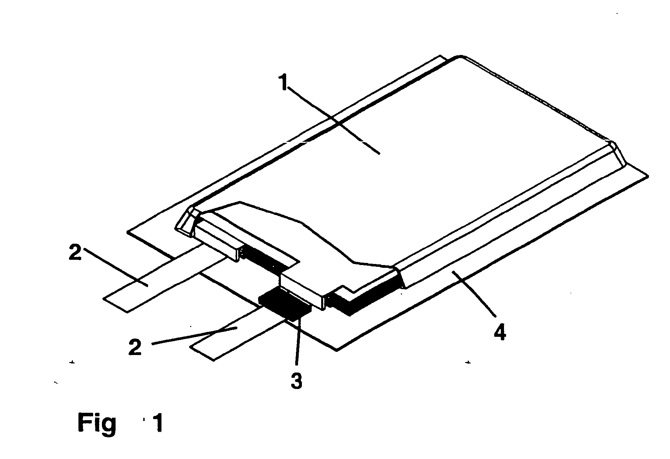

Gemäß Figur 1 ist in einen der beispielsweise aus Nickel-Folie bestehenden Ableiter 2, welche als elektrische Kontakte dienen, des dünnen galvanischen Elements 1 ein PTC-Element 3 elektrisch integriert. Insbesondere ist es eingeschweißt und so positioniert, dass es im Bereich des Siegelrandes 4 der Zelle angeordnet ist.

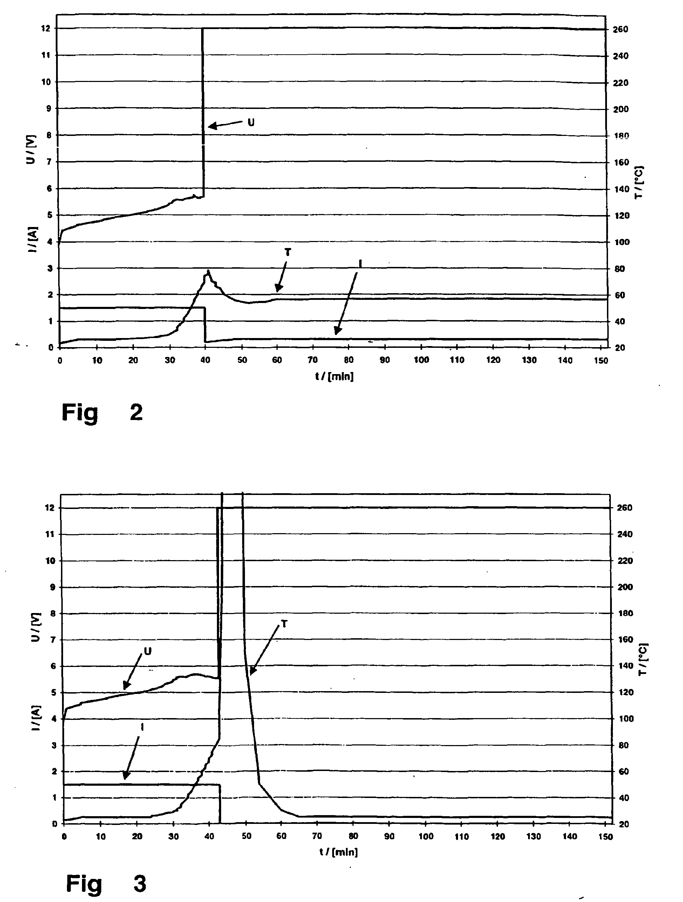

Wie Figur 2 und 3 zeigen, steigt die Temperatur T der Zellen und Spannung U bis etwa 40 Minuten langsam an. Der Strom I bleibt hierbei mit 2C (1,5 A) konstant.

Bei der in Figur 3 dargestellten Zelle ohne PTC steigt die Temperatur T nach 43 Minuten exponentiell an, und die Zelle verbrennt.

Die Zelle mit PTC (Figur 2) hat nach 41 Minuten ein außen gemessenes Temperaturmaximum von 75 °C, gleichzeitig steigt die Spannung U sprunghaft von 5,5 Volt auf die 12 Volt Begrenzung, und der Strom I fällt von 1,5 A auf ca. 200 mA ab. Nach ca. 1 Stunde stabilisiert sich die Temperatur auf 55 °C und der Strom auf 300 mA.

Folgender Mechanismus hat zu diesem Verhalten geführt:
Bis 40 Minuten verhielt sich der PTC neutral bzw. niederohmig. Nach 41 Minuten hat die zu diesem Zeitpunkt im Softpack bestehende Temperatur dazu geführt, dass der PTC schlagartig hochohmig und der Strom dadurch auf ca. 200 mA begrenzt wurde. Durch die Abkühlung des PTC steigt dessen Leitfähigkeit wieder an und somit auch der Strom. Nach ca. 1 Stunde hat sich das System stabilisiert und seinen Arbeitspunkt bei 55 °C und 300 mA gefunden.

## Patentansprüche

1. Wiederaufladbares galvanisches Element (1) mit mindestens einer Lithium interkalierenden Elektrode und einem dicht verschlossenen dünnen flexiblen Gehäuse aus zwei durch eine Klebe- oder Siegelschicht (4) miteinander verbundenen Metall- oder Metall/Kunststoff-Verbund-Folien, **dadurch gekennzeichnet, dass** innerhalb des Elements (1) in einen der elektrischen Anschlüsse (2) ein PTC-Element (3) in Reihe geschaltet ist, wobei das PTC-Element in die Klebe- oder Siegelschicht (4) eingebettet ist.

2. Wiederaufladbares galvanisches Element nach Anspruch 1, **dadurch gekennzeichnet, dass** das PTC-Element (3) mit einem gegen organische Elektrolyte resistenten Kunststoffüberzug versehen ist.

3. Wiederaufladbares galvanisches Element nach einem der vorhergehenden Ansprüche, **dadurch gekennzeichnet, dass** es mehrere aufeinander gestapelte Elektroden enthält.

## Claims

1. Rechargeable galvanic element (1) with at least one lithium-intercalating electrode and a sealed thin flexible casing comprising two metal or composite metal/plastic sheets joined to each other by an adhesive or sealing layer (4), **characterized in that,** inside the element (1), a PTC element (3) is connected in series into one of the electrical connections (2), the PTC element being embedded into the adhesive or sealing layer (4).

2. Rechargeable galvanic element according to Claim 1, **characterized in that** the PTC element (3) is provided with a plastic coating resistant to organic electrolytes.

3. Rechargeable galvanic element according to either of the preceding claims, **characterized in that** it contains a number of electrodes stacked one on top of the other.

## Revendications

1. Élément galvanique (1) rechargeable comprenant au moins une électrode à intercalation de lithium et une boîtier souple mince fermé hermétiquement constitué de deux films métalliques ou composites métal/plastique reliés entre eux par une couche de collage ou de scellement (4), **caractérisé en ce qu'**un élément CTP (3) est branché en série à l'intérieur de l'élément (1) dans l'une des bornes électriques (2), l'élément CTP étant noyé dans la couche de collage ou de scellement (4).

2. Élément galvanique rechargeable selon la revendication 1, **caractérisé en ce que** l'élément CTP (3) est muni d'un revêtement en matière plastique résistant aux électrolytes organiques.

3. Élément galvanique rechargeable selon l'une des revendications précédentes, **caractérisé en ce qu'**il contient plusieurs électrodes empilées les unes sur les autres.
